# EUROPEAN PATENT SPECIFICATION

(11) **EP 1 919 830 B1**
(45) Date of publication and mention of the grant of the patent: **08.09.2010**
(21) Application number: 06764893.1
(22) Date of filing: 03.07.2006
(51) Int. Cl.: C02F 1/00, G01N 31/16

(54) **CONTROL APPARATUS FOR A LIQUID DISPENSE SYSTEM**
STEUERVORRICHTUNG FÜR EIN FLÜSSIGKEITSABGABESYSTEM
APPAREIL DE COMMANDE D'UN SYSTEME DE DISTRIBUTION DE LIQUIDE

(30) Priority: 30.07.2005 GB 0515769; 10.02.2006 GB 0602707
(43) Date of publication of application: 14.05.2008
(73) Proprietor: OTV SA, 94417 Saint-Maurice Cedex (FR)
(72) Inventor: UNDERWOOD, Lee, Bucks HP15 7DT (GB)
(74) Representative: Earnshaw, Geoffrey Mark
(86) International application number: PCT/GB2006/002468
(87) International publication number: WO 2007/015048

(56) References cited:
- EP-A- 1 134 190
- DE-A1- 19 723 852
- GB-A- 1 048 948
- US-A- 5 865 991
- US-A- 5 895 565
- US-A1- 2005 127 115
- US-B1- 6 312 589
- US-B1- 6 319 414
- US-B1- 6 372 505
- "ULLMANNS ENCYKLOPÄDIE DER TECHNISCHEN CHEMIE" 1980, VERLAG CHEMIE , XP002396579 4th edition, vol. 5, pages 934-936, chapter 12 "Titrierverfahren"
- DR. OTTO-ALBRECHT NEUMÜLLER: "Römpps Chemie-Lexikon" 1988, FRANCKH'SCHE VERLAGSHANDLUNG , STUTTGART , XP002396830 page 4284

## Description

The present invention relates to a method of controlling a system to allow liquid dispense operations to be carried out in a controlled and repeatable manner.

In the field of liquid dispensing and, more particularly, in the field of water purification, distribution and dispensing for applications such as laboratories, medical, clinical, drinking, manufacturing and others, there are a number of methods for controlling the liquid or water that is dispensed from the system.

There are also various requirements of a user of such a system including filling empty containers and making up solutions to a known total volume. These operations of the dispense system will be laboratory specific and will depend upon the activities therein but are often repeated as the operations and vessels will be standard to the particular laboratory and may be detailed in Work Instructions or Standard Operating Procedures.

The simplest method is for a user of the water system to manually operate a valve and regulate the flow by the position of a valve. This has the advantage that the user is regulating the rate of water flowing from the system as well as being able to (roughly) control the total amount dispensed by being able to close the valve when the desired amount has been dispensed. It allows the user to dispense any amount of water, which is important when making up solutions that have a non-water component already in a flask. It is often the case that the water flow rate is reduced at the end of the fill operation to prevent splashing of water from a container or to allow a stop when a fill line marked on a container is reached, and this rate of flow may be as little as drop-wise dispense.

Electro-mechanical improvements to water dispense systems have been made with inputs such as potentiometers, angle encoders or keypads. Control of the dispense has been aided by microprocessor algorithms to give greater control at low flows, and greater control has been gained by control of the pump speed, use of proportional valves or multiple valves.

However, this method of dispensing usually still requires the user to be present at all times and, repeat accuracy can be user dependant Close supervision or checks may be required for regulatory or procedural purposes and this may involve significant labour time.

Water dispensing systems have also been developed that reduce the input from the user. These have involved the pressing of a button to dispense a 'volume' of water, such as EP 1134190A. The volume may be determined either by a flow meter directly measuring the amount dispensed or by a timer dispensing for a known period. However, each of these arrangements has its disadvantages. Use of a flow meter requires extra components, and, as well as the cost, these are usually in the flow-stream and can re-contaminate the water. Flow meters may also be affected by fluctuations in conditions such as temperature and pressure. Timers are susceptible to specific site conditions, such as the feed pressure, which may reduce the accuracy of the dispensed volume. They may also be affected by changes to any processes within the equipment such as pump wear or filter blockage.

The input for these dispense methods allow set volumes to be dispensed, but these volumes are often only discreet values, such as 1,2 or 3 litres. In other systems discreet fractions are allowed, but these require user input and a degree of calculation, or worse, guesswork, to ascertain the amount of water required to fill an already part filled container, a common situation when preparing solutions.

The US 2005/0127115 relates to a water purification apparatus having an inlet, an outlet and a least one purification means in between. The outlet includes first and second release means that operable at different flow rates. The purification apparatus thus provides an operator with the ability to accurately obtain an exact volume of water.

US 6,319,414 relates to an apparatus and corresponding method for purifying water. The apparatus includes a housing, a source of power, a filter device containing interchangeable filter units, a mechanism for driving water through the filter device, a timing mechanism for monitoring elapsed time, and a mechanism for monitoring cumulative flow coupled to a memory.

US 6,312,589 relates to modular water treatment apparatus for soft drink post-mix dispensers. The apparatus includes a filter unit and modules for UV treatment and ion-exchange. The apparatus also includes a control module for providing monitoring and control.

US 5,865,991 relates to a monitoring device for a drinking water purification system that comprises a microprocessor that controls the overall operation of the system. The monitoring system enables a warning to be generated where filtration elements become clogged with impurities.

The Kirk-Othmer Encyclopedia of Chemical Technology discloses an article on process control at page 18, J. Hahn et al., 17 October 2003. In the article the principle of creating an empirical model based on recorded process data is disclosed.

It is an object of the present invention to provide an apparatus and method for overcoming these disadvantages.

Thus, according to one aspect of the present invention, there is provided a method of controlling a water purification and dispensing system as claimed in Claim 1.

By recording the dispense profile of a first dispense operation, such dispense profile can be repeated, if desired, for subsequent dispense operations to dispense the same volume of liquid in a repeatable manner.

Once a dispense operation has been completed, the dispense profile may be stored in a memory device. Such a stored dispense profile is labelled or tagged to permit selection by a subsequent user desiring the same profile.

In one embodiment, the control means and the recording means may comprise a microprocessor having an associated memory device.

The at least one flow control device may comprise a variable output pump and/or a flow control valve. The apparatus may also include one or more flow meters. Data from any such devices, valves and meters are recordable by the recording means during a dispense operation.

Preferably the recording means records the direct inputs of the user to the operating means and/or the parameters of the operating means to effect the user input.

The operating means may be any element or combination of elements adapted to provide operation, generally control, of the liquid dispense system, especially at the outlet. Such operating means may include one or more controllers, one or more sensing devices, and one or more input devices, generally including one or more user interfaces. Such input devices may be angle encoders, potentiometers, and key pads, or other such devices, by or through which a user can input information for a final liquid dispense.

Preferably the flow rate is varied during said dispense operation.

Parameters which are recordable by the recording means may be the direct parameters inputted by a user, and/or may be the parameters of the operating means to affect the user input. The latter can include the parameters of the controller to operate the outlet(s) and/or other parts of the apparatus, such as the control means for a pump that regulates output of the device, the voltage supplied to such a pump, as well as inlet and outlet valve positions and/or voltages.

Recordable parameters include time, speed and/or rate of flow, either directly or indirectly (i.e., voltages, sequences, settings, etc of the operating means, such as a controller), which parameters generally create a dispense profile over the operation or operation of the dispense. One or more of parts of the profile may be constant or variable.

For example, more accurate dispense may be desired by controlling the rate of release of liquid through the outlet using two or more flow rates, one flow rate being a relatively slow flow rate (such as up to 0.1 litre per minute), and another flow rate being a relatively fast flow rate, for example of up to 2 litres per minute, the relatively fast flow being useable between an initial slow rate period and a final slow rate period.

The operating means may also include one or more other devices such as one or more clocks, as well as other devices generally used in dispense system such as valves and pumps, preferably in the form of a circuit.

The recording means may be any suitable means able to record and store one or more of the parameters of a liquid dispense profile. The recording means may record all parameters of the profile, or those parameters necessary to be able to repeat the profile. The recording means may include a non-volatile memory device to store the dispense profile. Each dispense profile is associated with an identifier to permit the user to subsequently identify and select a desired dispense profile for use in a subsequent dispense operation.

The recording means may be removable from the apparatus and replicated and/or used in a similar piece of apparatus. The recorded information, i.e. the dispense profile, may be removable, copyable or otherwise translatable to another system, unit or apparatus.

The liquid is wholly or substantially water.

The liquid dispense system is a water purification and dispensing system including one or more water purification means comprising one or more filter membranes, ion exchangers and/or ultraviolet irradiation means.

Where the system includes more than one outlet, each outlet may have the same or different liquid dispense profile and/or parameters. For example, each outlet may allow a different flow rate, pressure or time or timing of dispense. The outlet(s) may be local to the system or at distance from the system, and the outlet(s) may be optionally connectable either manually or electronically.

The system may also include one or more liquid inlets, optionally connected to a constant or large source of such liquid.

The system may further comprise liquid processing means, such as liquid purification means and/or additive dosing means, that may be selectively operable during the dispense operation. The operation and/or status of the process means may be recorded during the dispense operation as part of the dispense profile, to be repeatable during a subsequent dispense operation.

One or more measuring devices may be provided, such as flow meters, for determining if flow rate and or volume of dispense of a dispense operation matches that in a stored dispense profile.

The present invention allows a subsequent user to have the option of using one or more recorded dispense profiles when requiring a liquid dispense. If a required profile is selected, the control apparatus automatically operates the dispense system, with each part of the system performing the same actions as when recording of the selected dispense profile occurred.

In one embodiment, this can result in the same quantity of water being dispensed over a pre-determined time sequence at the same (including zero) flow rate at each time interval over the dispense operation to allow for mixing, or avoid splashing, or to make sure that when fill lines that indicate a desired volume are approached, the fill volume is not exceeded.

An algorithm may be provided in the control means to cause the liquid dispense flow rate to increase or decrease, for example by increasing or decreasing the output from a pump, and/or to adjust the time over which dispense takes place, to compensate for pressure changes in the liquid supply to the system or within the system, for example due to partially blocked filters. Such pressure changes may be detected and compensated for by comparing the measured flow rate with the expected flow rate stored in the dispense profile.

The present invention has no limitations on the type or amounts or variability of the information that are recordable by the recording means, e.g. on the possible volume, time and/or flow rate amounts or levels that are desired either directly or indirectly by a user.

The dispense may therefore be for any volume and involve any flow rate over any time period, providing the user with the control of being present and manipulating the valve while giving the simplicity of low input operation with a high reproducibility.

The dispense will allow a user to have both hands free to carry out other actions such as stirring mixtures etc.

The dispense will also not vary between the different users in a laboratory increasing repeatability between the various users and allows a manager or supervisor to set an operation that others can then follow without variation.

In a further embodiment of the present invention, the liquid dispense system can include process operations that may be in operation or not during the dispense operation. This allows water to be purified and dispensed to a level that is suitable for the application that the water is required for, without unnecessary wear of components or exhaustion of consumables. These process operations are selectable or not via the input device or via another electronic input and the status of these could also be recorded during the dispense operation, and could be repeated during a subsequent dispense operation. The dosing of additives may be recorded and repeated in a similar manner. When the user wishes to repeat the dispense operation, he selects the desired dispense profile and the required processes and dispense is carried out automatically without other input.

In a further embodiment of the invention the water system may also include measuring devices such as flow meters that check whether the flow matches that in the dispense profile. If there are discrepancies in the values, as may occur for example due to pressure changes in the system as filters block, then an algorithm in the operating means, such as the controller microprocessor, can cause the flow to increase or decrease by increasing or decreasing the output from a pump, or the microprocessor may adjust the time that the valves are in a particular state. In such cases, the same liquid dispense is achieved.

The present invention provides a method whereby a liquid dispense operation can be repeated one or more times by the same or other users preferably by the control apparatus including a repeat recorded profile means, such as a button or keypad input. The recorded dispense profile could optionally be adaptable, such as by its inclusion in one or more other liquid operations and/or other dispense profiles or by re-programming by users.

An embodiment of the present invention will now be described by way of example only, and with reference to the accompanying drawings in which:
Fig 1 is a schematic plan of a water purification and dispense system,
Fig 2 is a block diagram showing the process of recording a dispense profile,
Fig 3 is a block diagram showing the process of dispensing using a recorded dispense profile.

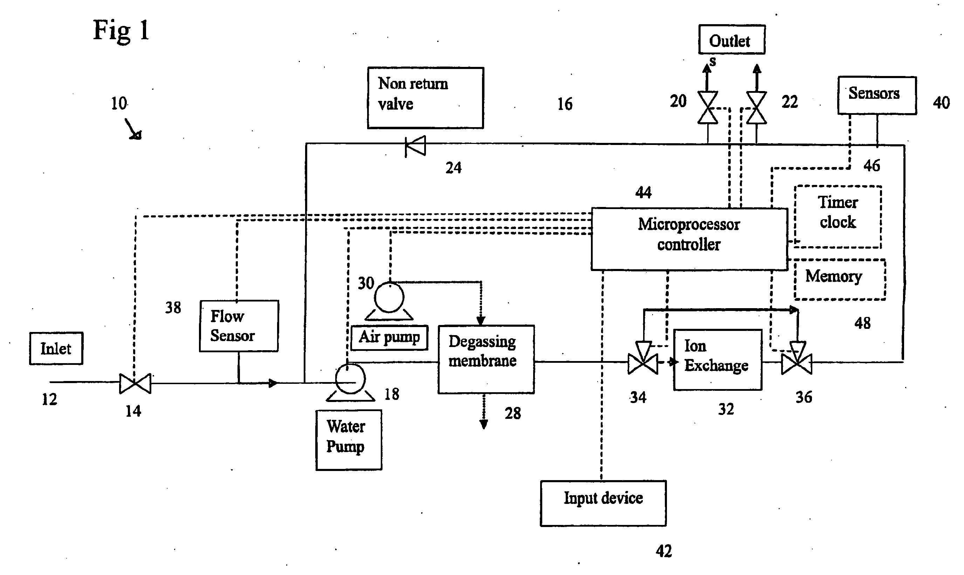

Referring to the drawings, there is shown in Figure 1 a water purification and dispensing system, 10, comprising a feed water inlet line, 12, that passes through an inlet valve, 14, to a recirculation loop 16, around which the water is pumped by pump 18. Water can be dispensed by one or more valves 20, 22, which may be of different size or at different localities, to an outlet or outlets. A non-return valve 24 provides a back pressure to push the water through the dispense valves 20, 22.

In the recirculation loop are placed purification processes. Shown in figure 1 are a degassing membrane, 28, with its associated air pump, 30, and an ion exchange cartridge 32, but it will be appreciated by those with knowledge of the art that various processes, including, but not limited to filtration, activated carbon, reverse osmosis, electrodeionisation or ultraviolet irradiation may also be used. Valves 34, 36 are present which allow the ion exchange cartridge to be bypassed when not required.

A flow sensor, 38, is fitted to the inlet line, and sensors, 40, such as for quality, temperature and pressure, are fitted to the recirculation loop.

An input device user interface, 42, such as an angle encoder and keypad, which may contain a display, connects into a microprocessor controller 44. A timer clock 46 may be a discreet device or may be part of the controller 44. The microprocessor links to each of the electrical devices to control their actions. All such elements can comprise the operating means. A recording means with an associated memory, 48, may be part of the controller or may be a separate item, such that separate memories are used for separate purposes or users. This may be required for reasons of security or procedure.

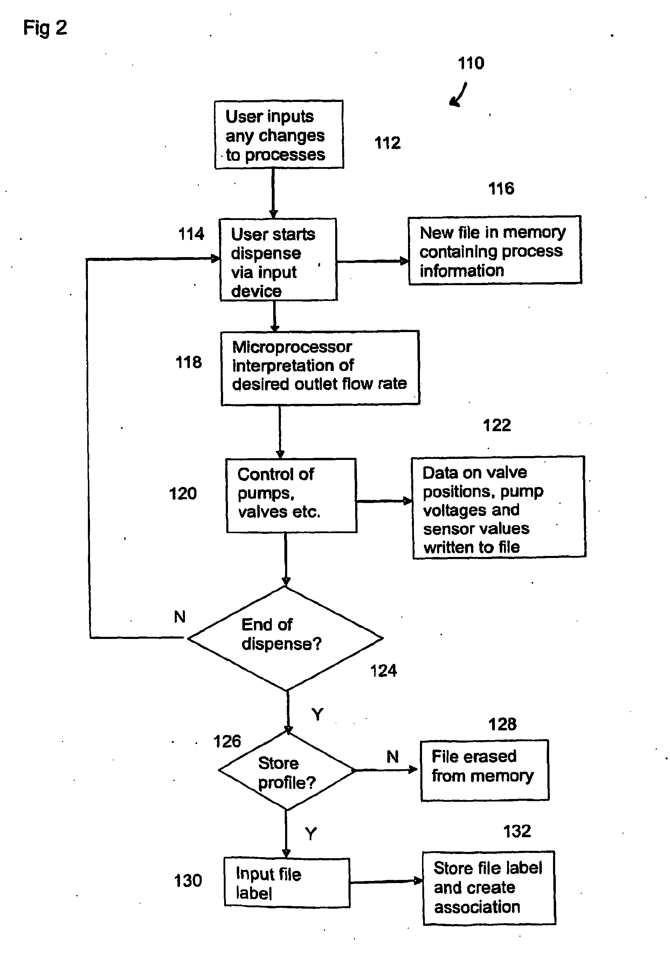

The methodology for recording a dispense profile is shown in figure 2 which shows a block diagram of the actions, 110. When a user wishes to dispense water he uses the input device, 42, to set any changes to the regular process activities that he desires, step 112, or selects a desired outlet valve 20, 22. This may be to avoid operation of the degassing section by setting the air pump, 30 to remain off during the dispense so saving wear on the pump, or could be to set the valves 34 and 36 to bypass the ion exchange cartridge, 32, to prevent its exhaustion and lengthen its lifetime.

At step 114 he uses the input device, 42, to start dispensing, and the microprocessor 44 opens a new file to record the necessary system parameters, such as the process settings, 116. At step 118 the microprocessor 44 interprets the signal from the input device 42 and in step 120 controls the water pump, 18 and valves 14, 20, 22 as necessary to achieve the desired outlet flow rate. Manipulation of the input device 42 by the user can alter the rate of flow at the outlet as desired. Throughout the dispense operation the microprocessor 44 writes the condition of each operation of each element or component of the system 10 to the memory, step 122. Once the dispense operation is complete, the user could set the input device 42 to an off position. Alternatively a button press can be used to verify the end of the dispense operation, step 124.

The system 10 then asks the user whether the profile should be retained in the memory for future use, step 126. The user uses the input device 42 to signal whether it should or not. If not then the profile is removed from the memory, step 128. If the user indicates that the profile should be kept, then the system 10 asks for a label to be applied to the label, step 130. If no label is supplied a default label can be given. An association is then created between the label and the profile in step 132. The label may alternatively be given prior to the commencement of the dispense operation. The label may be text, numerical, date/time and/or pictographic as desired.

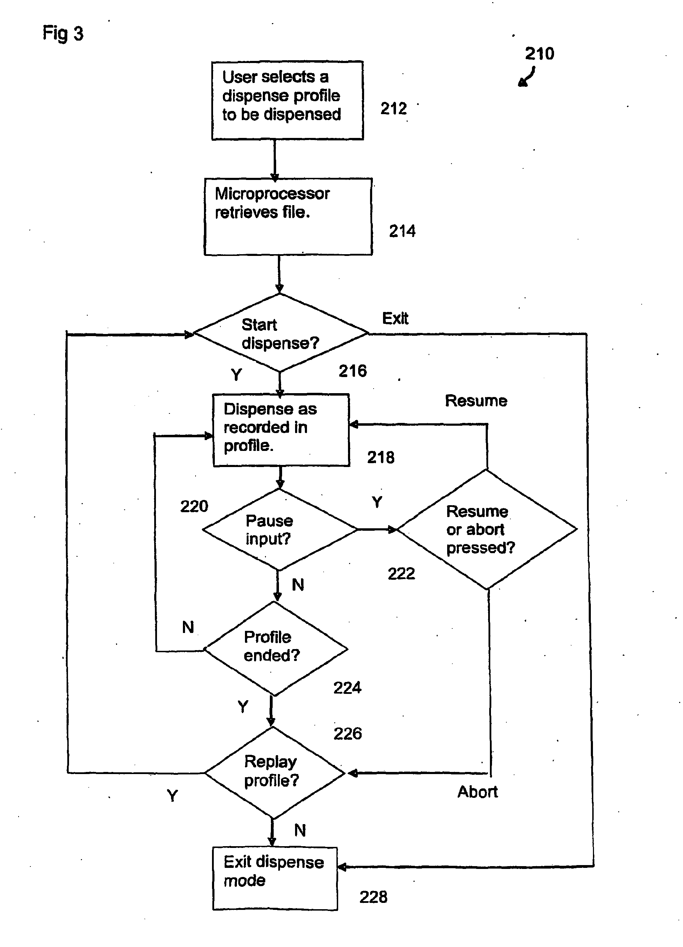

The methodology for the use of a recorded dispense profile is shown in figure 3 by a block diagram of the actions, 210. When the user wishes to dispense a pre-recorded dispense profile he uses the input device 42 to select a profile from those stored by using the label associated with the required profile, step 212. The microprocessor 44 retrieves the profile from the memory 48, step 214, and, after a 'start dispense' input is given at step 216, starts to give signals to the various elements of the operating means to carry out the dispense, step 218. The same dispense will then be carried out with control functions (usually, although not necessarily) operating in the same way and resulting in the required flow being dispensed.

While carrying out the dispense, the user may interrupt the dispense via the input device 42, step 220. This may be required if other activities in the laboratory necessitate it. Another input could then either abort the dispense or restart it where it was interrupted, step 222. The microprocessor 44 will also monitor whether the dispense has ended, step 224. When the profile is complete, the microprocessor 44 asks via the input device display whether the same profile should be re-run, step 226. This may be useful in certain situations, and will save the user having to re-find the profile from those stored. If the profile is not to be re-run, the water system exits the dispense mode, step 228.

The present invention allows a user to repeatedly dispense the same volume, flow etc of liquid from a liquid system in a manner that is suitable for each of his applications, and to do so in full control of the rate at which the liquid is dispensed throughout the dispense operation.

## Claims

1. A method of controlling a water purification and dispensing system (10) of the type comprising at least one water outlet, at least one flow control device for controlling the flow rate of water from said at least one water outlet, one or more water purification means and a control apparatus, said control apparatus comprising:-
operating means for controlling the operation of the at least one flow control device to permit dispense of a desired volume of water from said outlet(s) during a dispense operation;
recording means for recording the parameters of the operating means to affect a user input to create a dispense profile including the parameter(s) of time, speed and/or rate of flow for said dispense operation; and
control means for controlling the operation of the operating means during a subsequent dispense operation based upon the recorded dispense profile:
the method of controlling said system comprising:
recording the parameters of the operating means to affect the user input during the dispense operation to create the dispense profile for said dispense operation;
controlling the operation of the operating means during a subsequent dispense operation based upon the recorded dispense profile; and labelling or tagging the stored dispense profile to permit selection by a subsequent user desiring the same dispense profile.

2. A method as claimed in claim 1 wherein recording the parameters comprises recording at least the flow rate of water at the outlet.

3. A method as claimed in claim 1 or claim 2, further comprising storing the dispense profile in the memory device once a dispense operation has been completed.

4. A method as claimed in any preceding claim, wherein the control means and the recording means comprise a microprocessor (44) having an associated memory device.

5. A method as claimed in any preceding claim, wherein the at least one flow control device comprises a variable output pump (18) and/or a flow control valve.

6. A method as claimed in any preceding claim, further including recording data from a flow meter (38) during a dispense operation.

7. A method as claimed in any preceding claim, wherein the operating means comprises an element or combination of elements adapted to provide control of the water purification and dispensing system.

8. A method as claimed in claim 7, wherein the operating means comprises an element or combination of elements adapted to provide control of the water purification and dispensing system at the water outlet(s).

9. A method as claimed in claim 7 or claim 8, wherein the operating means includes one or more controllers, one or more sensing devices, and one or more input devices, including one or more user interfaces.

10. A method as claimed in claim9, wherein the one or more input devices comprise at least one of an angle encoder, a potentiometer, and a key pad.

11. A method as claimed in any preceding claim, further comprising varying the flow rate during said dispense operation.

12. A method as claimed in any preceding claim, further comprising selectively operating water processing means during the dispense operation.

13. A method as claimed in claim 12, further comprising recording the operation and/or status of the water processing means during the dispense operation as part of the dispense profile.

14. A method as claimed in any preceding claim, further comprising determining by a measuring device if flow rate and/or volume of dispense of a dispense operation matches that in a stored dispense profile.

15. A method of dispensing water from a water purification and dispensing system (10) as defined in any one of claims 1 to 14, comprising using a recorded dispense profile as defined in any one of claims 1 to 14.

## Patentansprüche

1. Ein Verfahren zur Regelung eines Wasserreinigungs- und -abgabesystems (10) der Art, die mindestens einen Wasserauslass, mindestens eine Durchflussregelungsvorrichtung zur Regelung der Durchflussrate von Wasser von dem mindestens einen Wasserauslass, ein oder mehrere Wasserreinigungsmittel und eine Regelungsvorrichtung beinhaltet, wobei die Regelungsvorrichtung Folgendes beinhaltet:
Betriebsmittel zur Regelung des Betriebs der mindestens einen Durchflussregelungsvorrichtung, um während eines Abgabebetriebs die Abgabe eines gewünschten Volumens an Wasser aus dem Auslass/den Auslässen zuzulassen;
Aufzeichnungsmittel zum Aufzeichnen der Parameter der Betriebsmittel, um zu bewirken, dass eine Benutzereingabe ein Abgabeprofil einschließlich des Parameters/der Parameter der Zeit, Geschwindigkeit und/oder Rate des Durchflusses für den Abgabebetrieb schafft; und
Regelungsmittel zur Regelung des Betriebs der Betriebsmittel während eines nachfolgenden Abgabebetriebs basierend auf dem aufgezeichneten Abgabeprofil; wobei das Verfahren zur Regelung des Systems Folgendes beinhaltet:
Aufzeichnen der Parameter der Betriebsmittel, um zu bewirken, dass die Benutzereingabe während des Abgabebetriebs das Abgabeprofil für den Abgabebetrieb schafft;
Regelung des Betriebs der Betriebsmittel während eines nachfolgenden Abgabebetriebs basierend auf dem aufgezeichneten Abgabeprofil und
Kennzeichnen oder Markieren des gespeicherten Abgabeprofils, um die Auswahl durch einen nachfolgenden Benutzer, der das gleiche Abgabeprofil wünscht, zuzulassen.

2. Verfahren gemäß Anspruch 1, wobei das Aufzeichnen der Parameter das Aufzeichnen von mindestens der Durchflussrate von Wasser an dem Auslass beinhaltet.

3. Verfahren gemäß Anspruch 1 oder Anspruch 2, das ferner das Speichern des Abgabeprofils in der Speichervorrichtung, sobald ein Abgabebetrieb abgeschlossen worden ist, beinhaltet.

4. Verfahren gemäß einem der vorhergehenden Ansprüche, wobei die Regelungsmittel und die Aufzeichnungsmittel einen Mikroprozessor (44) beinhalten, der eine zugehörige Speichervorrichtung aufweist.

5. Verfahren gemäß einem der vorhergehenden Ansprüche, wobei die mindestens eine Durchflussregelungsvorrichtung eine einstellbare Ausgangspumpe (18) und/oder ein Durchflussregelungsventil beinhaltet.

6. Verfahren gemäß einem der vorhergehenden Ansprüche, das ferner das Aufzeichnen von Daten von einem Durchflussmesser (38) während eines Abgabebetriebs umfasst.

7. Verfahren gemäß einem der vorhergehenden Ansprüche, wobei das Betriebsmittel ein Element oder eine Kombination von Elementen beinhaltet, angepasst, um die Regelung des Wasserreinigungs- und -abgabesystems bereitzustellen.

8. Verfahren gemäß Anspruch 7, wobei die Betriebsmittel ein Element oder eine Kombination von Elementen beinhalten, angepasst, um die Regelung des Wasserreinigungs- und -abgabesystems an dem Wasserauslass/den Wasserauslässen bereitzustellen.

9. Verfahren gemäß Anspruch 7 oder Anspruch 8, wobei die Betriebsmittel einen oder mehrere Regler, eine oder mehrere Fühlvorrichtungen und eine oder mehrere Eingabevorrichtungen einschließlich einer oder mehrerer Benutzerschnittstellen umfassen.

10. Verfahren gemäß Anspruch 9, wobei die eine oder die mehreren Eingabevorrichtungen mindestens eines von einem Wnkelcodierer, einem Potentiometer und einem Tastaturbereich beinhalten.

11. Verfahren gemäß einem der vorhergehenden Ansprüche, das ferner das Einstellen der Durchflussrate während des Abgabebetriebs beinhaltet.

12. Verfahren gemäß einem der vorhergehenden Ansprüche, das ferner das selektive Betreiben der Wasseraufbereitungsmittel während des Abgabebetriebs beinhaltet.

13. Verfahren gemäß Anspruch 12, das ferner das Aufzeichnen des Betriebs und/oder des Status der Wasseraufbereitungsmittel während des Abgabebetriebs als Teil des Abgabeprofils beinhaltet.

14. Verfahren gemäß einem der vorhergehenden Ansprüche, das ferner das Bestimmen durch eine Messvorrichtung, ob die Durchflussrate und/oder das Volumen der Abgabe eines Abgabebetriebs der oder dem in einem gespeicherten Abgabeprofil entspricht, beinhaltet.

15. Verfahren der Abgabe von Wasser aus einem Wasserreinigungs- und -abgabesystem (10) wie in einem der Ansprüche 1 bis 14 definiert, das die Verwendung eines aufgezeichneten Abgabeprofils wie in einem der Ansprüche 1 bis 14 definiert, beinhaltet.

## Revendications

1. Une méthode pour contrôler un système de purification et de distribution d'eau (10) du type comprenant au moins une sortie d'eau, au moins un dispositif de contrôle de flux destiné à contrôler le débit d'eau sortant de cette dite au moins une sortie d'eau, un ou plusieurs moyens de purification d'eau et un appareil de contrôle, ledit appareil de contrôle comprenant :
un moyen de fonctionnement destiné à contrôler le fonctionnement de cet au moins un dispositif de contrôle de flux pour permettre la distribution d'un volume d'eau souhaitée depuis ladite ou lesdites sorties lors d'une opération de distribution ;
un moyen d'enregistrement destiné à enregistrer les paramètres du moyen de fonctionnement pour établir une entrée utilisateur afin de créer un profil de distribution incluant le ou les paramètres de durée, de vitesse et / ou de débit pour ladite opération de distribution ; et
un moyen de contrôle destiné à contrôler le fonctionnement du moyen de fonctionnement lors d'une opération de distribution subséquente sur la base du profil de distribution enregistré ;
la méthode pour contrôler ledit système comprenant :
enregistrer les paramètres du moyen de fonctionnement pour établir l'entrée utilisateur lors de l'opération de distribution afin de créer le profil de distribution pour ladite opération de distribution ;
contrôler le fonctionnement du moyen de fonctionnement lors d'une opération de distribution subséquente sur la base du profil de distribution enregistré ; et
étiqueter ou marquer le profil de distribution stocké pour permettre une sélection par un utilisateur subséquent souhaitant le même profil de distribution.

2. Une méthode telle que revendiquée dans la revendication 1 dans laquelle enregistrer les paramètres comprend enregistrer au moins le débit d'eau au niveau de la sortie.

3. Une méthode telle que revendiquée dans la revendication 1 ou la revendication 2, comprenant en outre stocker le profil de distribution dans le dispositif à mémoire une fois qu'une opération de distribution a été terminée.

4. Une méthode telle que revendiquée dans n'importe quelle revendication précédente, dans laquelle le moyen de contrôle et le moyen d'enregistrement comprennent un microprocesseur (44) ayant un dispositif à mémoire associé.

5. Une méthode telle que revendiquée dans n'importe quelle revendication précédente, dans laquelle cet au moins un dispositif de contrôle de flux comprend une pompe à débit variable (18) et / ou une soupape de régulation de flux.

6. Une méthode telle que revendiquée dans n'importe quelle revendication précédente, incluant en outre enregistrer des données provenant d'un débitmètre (38) lors d'une opération de distribution.

7. Une méthode telle que revendiquée dans n'importe quelle revendication précédente, dans laquelle le moyen de fonctionnement comprend un élément ou une combinaison d'éléments adaptés pour fournir un contrôle du système de purification et de distribution d'eau.

8. Une méthode telle que revendiquée dans la revendication 7, dans laquelle le moyen de fonctionnement comprend un élément ou une combinaison d'éléments adaptés pour fournir un contrôle du système de purification et de distribution d'eau au niveau de la ou des sorties d'eau.

9. Une méthode telle que revendiquée dans la revendication 7 ou la revendication 8, dans laquelle le moyen de fonctionnement inclut un ou plusieurs organes de contrôle, un ou plusieurs dispositifs de détection, et un ou plusieurs dispositifs d'entrée, incluant une ou plusieurs interfaces utilisateurs.

10. Une méthode telle que revendiquée dans la revendication 9, dans laquelle cet ou ces dispositifs d'entrée comprennent au moins soit un codeur d'angle, soit un potentiomètre, soit un clavier.

11. Une méthode telle que revendiquée dans n'importe quelle revendication précédente, comprenant en outre faire varier le débit lors de ladite opération de distribution.

12. Une méthode telle que revendiquée dans n'importe quelle revendication précédente, comprenant en outre faire fonctionner de façon sélective le moyen de traitement d'eau lors de l'opération de distribution.

13. Une méthode telle que revendiquée dans la revendication 12, comprenant en outre enregistrer le fonctionnement et / ou le statut du moyen de traitement d'eau lors de l'opération de distribution comme faisant partie du profil de distribution.

14. Une méthode telle que revendiquée dans n'importe quelle revendication précédente, comprenant en outre déterminer par un dispositif de mesure si le débit et / ou le volume de distribution d'une opération de distribution correspond à celui d'un profil de distribution stocké.

15. Une méthode pour distribuer de l'eau depuis un système de purification et de distribution d'eau (10) tel que défini dans n'importe laquelle des revendications 1 à 14, comprenant utiliser un profil de distribution enregistré tel que défini dans n'importe laquelle des revendications 1 à 14.
